# EUROPEAN PATENT APPLICATION

(11) **EP 1 900 803 A2**
(43) Date of publication of application: **19.03.2008**
(21) Application number: 07017709.2
(22) Date of filing: 11.09.2007
(51) Int. Cl.: C12G 3/02

(54) **A method for the preparation of mead**

(30) Priority: 12.09.2006 JP 2006247047
(71) Applicant: Shata Shuzou Co., Ltd., Hakusan-shi Ishikawa 924-0823 (JP)
(72) Inventor: Tokuda, Koji, Hakusan-shi Ishikawa 924-0823 (JP); Aburatani, Miyuki, Hakusan-shi Ishikawa 924-0823 (JP)
(74) Representative: McKelvey, Ian Edward

(57) **Abstract**

Mead is prepared by subjecting honey and water to primary fermentation with rice ko̅ji for sho̅chu̅ and yeast. The mead has a dry taste with decreased sugar contents, and can substitute for a dry white table wine. The honey used in the method may have been flavoured by using it as a marinade to extract the flavour from an edible flavour source such as flowers, fruits and herbs. Black ko̅ji or white ko̅ji may be used as the rice ko̅ji for sho̅chu̅. Preferably, the weight of the rice ko̅ji for sho̅chu̅ is 1% to 10% of the combined weight of the honey and water, and the amount of water added is determined such that the sugar content is 10% to 20% of the combined weight of honey and water.

## Description

### Technical Field

The invention relates to a method for the preparation of mead.

### Background of the Invention

Honey, because it contains limited amounts of amino acids that are the ingredients necessary for alcoholic fermentation, is less capable of fermentation than many other substances resulting in an insufficient alcohol level being achieved. Thus most meads have a mild yet indistinctive taste; even the addition of amino acids or the like to them as a fermentation aid would rather spoil the taste.

JP(A) 2005-000158 discloses a mead having an increased alcohol content by fermenting polyacid sake with the addition of honey to it during its production process, and then adding a slops screen agent to it for refinement and filtration.

### Description of the Invention

It may be possible to augment the fermentative power of honey by the addition of rice ko̅ji thereby increasing the alcohol level; however, it is known that the use of rice ko̅ji for sake offers a problem that a unique, unfavourable taste remains in the sake product.

In these circumstances, the main object of the invention is to improve on fermentative power, thereby providing a method capable of making tasteful mead having an unusual dry flavour.

According to the invention, this object is achieved by the provision of a method for the preparation of mead characterized in that honey and water is subjected to primary fermentation with rice ko̅ji for sho̅chu̅ and yeast.

Ko̅ji is a preparation obtained by growing a kind of mould (usually Aspergillus oryzae) on boiled rice, barley, soybeans and the like, and is used as a starter for fermentation in sake and soy-sauce production. Sho̅chu̅ is a kind of Japanese spirit distilled from sweet potatoes, rice and the like. Black ko̅ji or white ko̅ji may be used as the rice ko̅ji for sho̅chu̅. Preferably, the weight of the rice ko̅ji for sho̅chu̅ is 1 % to 10% of the combined weight of the honey and the water.

Preferably, the honey used is one that is derived from a source having a pleasant, mild taste such as acacia, a lotus flower, a clover and a mandarin orange. In particular, honey derived from the mandarin orange provides a mead characterised by a pleasant citrus flavour.

The honey may, optionally, have been flavoured by using it as a marinade to extract the flavour from an edible flavouring source, such as flowers, fruits and herbs. Such fruits include, for example, an unripe green ume (*Prunus mume*), umes used for ume brandy, yuzu (*Citrus junos*), sudachi (*Citrus sudachi*), kabusu (*Citrus sphaerocarpa*) and lemon (*Citrus limon*). Different edible flavour sources may be used in combination.

The amount of the water added is preferably determined such that the sugar content amounts to 10% to 20% of the combined weight of the honey and the water.

The yeast used may be sake yeast, sho̅chu yeast or wine yeast. Yeast separated from honey may just as well be used.

### Example 1

4.3 liters of water were added to 1 kg of honey, to which 260 g of rice ko̅ji for sho̅chu̅ (white ko̅ji) and 15 grams of sake yeast (on a dry basis) were then added for the primary fermentation at 15°C to 30°C for 3 to 8 days. This primary fermentation brought the residual sugar content of the liquor down to 1% or less, and kept the proof to 10% or less as well. Then, a further 1.2 kg of honey were added to the liquor which was then subjected to the secondary fermentation at 15°C to 30°C for 5 to 12 days. When the proof built up to 13% or higher, solid matters were separated off, and the liquor was filtered and refined to obtain the end mead.

The obtained mead was found to have a dry taste with decreased sugar contents, and be drinkable even at the table just like a dry white wine.

In the invention, two fermentation runs are carried out for the following reasons. The growth of yeast fungi is susceptible of being restricted by the proof too; only one single fermentation run requires high initial sugar contents and so plenty of fermentation is unlikely. Even with multiple fermentations, sufficient secondary fermentation is unlikely when the primary fermentation run is carried out at an increased sugar content of 10% or more than 10%. In consideration of labour and time, therefore, two fermentation runs would be optimum.

### Example 2

A flavour (for instance, one or more lemon flavours) was introduced into honey by using the honey as a marinade for a source of that flavour. Water was added to the honey with the flavour added to it such that the sugar content amounted to 10% to 20% in consideration of the water coming off the lemon or the like. Then, rice ko̅ji (white ko̅ji) for sho̅cho̅ was added to the honey in an amount of 1% to 10% of the weight of honey plus water with a further addition of sake yeast (dry) for the primary fermentation at 15°C to 30°C for 3 to 8 days. Here, the honey may just as well be fermented without removal of the lemon or other flavours. This primary fermentation brought the remaining sugar content of the liquor down to 1% or less, and kept the proof at 10% or lower as well. Further honey was added to the liquor in an amount of 1 to 1.5 times as much as the weight of the honey used for the primary fermentation for the secondary fermentation at 15°C to 30°C for 5 to 12 days. When the proof built up to 13% or higher, solid matters were separated off, and the liquor was filtered and refined to obtain the end mead.

The obtained mead was found to be a unique one that had the taste of the flavour added, quite different from liquors made by pickling flavouring fruits in alcohol.

### Advantages of the Invention

By use of the rice ko̅ji for sho̅chu̅, the fermentative power is improved with the addition of the taste unique to the rice ko̅ji, thereby successfully providing mead with reduced residual sugar contents yet with a dry, distinctive taste.

It is also possible to make a new alcoholic beverage having in it citric acid that is contained in the rice ko̅ji for sho̅chu̅, and that is now taken to be as healthy as honey.

Further, by marinating edible flavouring sources in the honey, it is possible to make a novel alcoholic beverage having a pleasant flavour unique to it.

The honey is fermented with the extraction of the flavour in it due to its high osmotic pressure; it is possible to produce an alcoholic beverage quite different from liquors made by made by pickling flavouring fruits in alcohol.

## Claims

1. A method for the preparation of mead **characterized in that** honey and water is subjected to primary fermentation with rice ko̅ji for sho̅chu̅ and yeast.

2. A method according to claim 1 wherein the honey used has been flavoured by using it as a marinade to extract the flavour from an edible flavouring source.

3. A method according to claim 1 or claim 2 wherein the rice ko̅ji for sho̅chu̅ is white ko̅ji or black ko̅ji.

4. A method according to any preceding claim **characterized in that** the weight of the rice ko̅ji for sho̅chu̅ is from 1% to 10% of the combined weight of the honey and water.

5. A method according to any preceding claim **characterized in that** the amount of the water is determined such that the sugar content is from 10% to 20% of the combined weight of the honey and water.
